# EUROPÄISCHE PATENTANMELDUNG

(11) **EP 4 124 408 A1**
(43) Veröffentlichungstag der Anmeldung: **01.02.2023**
(21) Anmeldenummer: 22187234.4
(22) Anmeldetag: 27.07.2022
(51) Int. Cl.: B23Q 3/155, B25H 3/04

(54) **VORRICHTUNG ZUR AUFBEWAHRUNG VON WERKZEUGEN**

(30) Priorität: 28.07.2021 DE 102021119631
(71) Anmelder: Gümatec, 42857 Remscheid (DE); TEuBS Technischer Entwicklungs und Beratungs Service, 40231 Düsseldorf (DE)
(72) Erfinder: Böhm, Andreas, 40231 Düsseldorf (DE)
(74) Vertreter: Cohausz & Florack

(57) **Zusammenfassung**

Dargestellt und beschrieben ist eine Vorrichtung (1) zur Aufbewahrung von Werkzeugen (9), umfassend mehrere Tragelemente (3, 10, 11) und einen Rahmen (2) zum Halten der Tragelemente (3, 10, 11), wobei die Tragelemente (3, 10, 11) jeweils mehrere Aufnahmen (4) zum Einstecken von Werkzeugen (9) aufweisen, wobei die Aufnahmen (4) jeweils eine Mittelachse (5) aufweisen, und wobei wenigstens zwei der Tragelemente (3, 10, 11) in dem Rahmen (2) übereinander angeordnet sind. Um die Werkzeuge unter geringerem Platzbedarf aufzubewahren, wird vorgeschlagen, dass in radialer Richtung zwischen drei unmittelbar benachbarten Mittelachsen (5) der Aufnahmen (4) eines Tragelements (3, 10, 11) die zwei Abstände (A) ungleich sind, und/oder die Mittelachsen (5) der Aufnahmen (4) eines der Tragelemente (3, 10, 11) in radialer Richtung jeweils beabstandet sind von den Mittelachsen (5) der Aufnahmen (4) von dem unmittelbar darüber und/oder von dem unmittelbar darunter angeordneten Tragelement (3, 10, 11).

## Beschreibung

Die Erfindung betrifft eine Vorrichtung zur Aufbewahrung von Werkzeugen, umfassend mehrere Tragelemente und einen Rahmen zum Halten der Tragelemente, wobei die Tragelemente jeweils mehrere Aufnahmen zum Einstecken von Werkzeugen aufweisen, wobei die Aufnahmen jeweils eine Mittelachse aufweisen, und wobei wenigstens zwei der Tragelemente in dem Rahmen übereinander angeordnet sind.

Werkzeuge, die in Werkzeugmaschinen oder auch in Bearbeitungszentren verwendet werden, sind typischerweise vielfältig ausgestaltet. Jede Bearbeitungsaufgabe erfordert häufig mehrere unterschiedliche Werkzeuge. Beispielsweise können ein Fräskopf und ein Bohrkopf für eine Bearbeitungsaufgabe erforderlich sein. Daher sind die Werkzeuge meist in einer universellen Werkzeugaufnahme gehalten oder weisen eine solche Werkzeugaufnahme auf, die zu einer Bearbeitungsspindel einer Werkzeugmaschine korrespondierend ausgebildet ist. Über die Werkzeugaufnahme können Werkzeuge schnell und wiederholgenau gewechselt werden. Da meist nur eine begrenzte Anzahl an Werkzeugen in einer Werkzeugmaschine aufbewahrt werden kann, sind von der Werkzeugmaschine separate Vorrichtungen zur Aufbewahrung von Werkzeugen hilfreich.

Es ist jedoch bei den bekannten Vorrichtungen problematisch, dass diese viel Stellfläche benötigen und damit wichtigen Platz für den Maschinenbediener bzw. Nutzer der Vorrichtung in der Umgebung insbesondere von der Werkzeugmaschine einnehmen. Außerdem ist es nicht immer möglich, sämtliche Werkzeuge in einer einzigen Vorrichtung aufzubewahren. Die bekannten Vorrichtungen eignen sich zudem meist nicht zum Aufbewahren stark unterschiedlicher Werkzeuge, da die Werkzeuge stark voneinander abweichende Abmaße aufweisen können. Daher werden meist mehrere verschiedene Vorrichtungen zur Aufbewahrung benötigt.

Ein weiterer Nachteil bei den bekannten Vorrichtungen liegt darin, dass viel Zeit benötigt wird, ein Werkzeug aufzubewahren bzw. zu entnehmen, denn die Abstände von Aufnahmen sind vergleichsweise groß. Die Abstände von Aufnahmen können jedoch nicht einfach reduziert werden, da dann die Kollisionsgefahr der Werkzeuge gesteigert wird oder gar Werkzeuge nicht mehr in die Vorrichtung passen. Damit dauern bei den bekannten Vorrichtungen die Werkzeugwechsel meist recht lange, wodurch kostbare Maschinenzeit prinzipiell ungenutzt verstreicht. Außerdem sind die entnommenen Werkzeuge nicht immer eindeutig zuordenbar, weshalb ein Maschinenbediener zusätzliche Kontrollzeit einplanen muss.

Neben dem großen Bedarf an Arbeitszeit liegt ein weiterer Nachteil zu hoher Rüstzeiten darin, dass während des Wechsels der Werkzeuge auch Energie zum Betrieb der Werkstatt und ihrer Maschinen benötigt wird, beispielsweise Strom, der notwendig ist um Maschinen zu betreiben und den Betriebsdruck der Arbeitsmedien (Druckluft, Hydrauliköl) einzuhalten.

Vor diesem Hintergrund liegt der Erfindung die Aufgabe zugrunde, die eingangs beschriebene und zuvor näher erläuterte Vorrichtung derart auszugestalten und weiterzubilden, dass ein geringerer Platzbedarf der Vorrichtung bei hoher Aufnahmekapazität erreicht wird und dass die Werkzeugwechselzeiten verringert werden, um die Rüstzeiten zu reduzieren.

Diese Aufgabe wird bei einer Vorrichtung nach dem Oberbegriff von Anspruch 1 dadurch gelöst, dass in radialer Richtung zwischen drei unmittelbar benachbarten Mittelachsen der Aufnahmen eines Tragelements die zwei Abstände ungleich sind, und/oder die Mittelachsen der Aufnahmen eines der Tragelemente in radialer Richtung jeweils beabstandet sind von den Mittelachsen der Aufnahmen von dem unmittelbar darüber und/oder von dem unmittelbar darunter angeordneten Tragelement.

Eine erfindungsgemäße Vorrichtung dient Aufbewahrung von Werkzeugen und kann daher auch als "Werkzeugwagen" bezeichnet werden. Typischerweise weist eine Vorrichtung mehrere Tragelemente auf, in denen Werkzeuge in Aufnahmen eingesetzt bzw. aus diesen entnommen werden können. Die Tragelemente sind dabei meist, zumindest im Wesentlichen, insbesondere zumindest in einer Richtung, horizontal bzw. sich horizontal erstreckend angeordnet, beispielsweise in der Art von Regalböden oder Schubladen eines Schrankes. Dabei ist nicht ausgeschlossen, dass das Tragelement um eine, zumindest im Wesentlichen, horizontale Richtung geneigt und/oder neigbar ausgebildet ist, beispielsweise wie schwenkbare Lamellen einer Jalousie, insbesondere um eine einfacherer Einsehbarkeit der Aufnahmen zu erreichen. Es sind ferner wenigstens zwei der Tragelemente übereinander, sozusagen in mehreren Etagen gestapelt, angeordnet. Die wenigstens zwei übereinander angeordneten Tragelemente müssen jedoch nicht fluchtend übereinander angeordnet sein, können also auch versetzt übereinander angeordnet sein. Insbesondere ist bei der Vorrichtung ein Rahmen vorgesehen, in dem die mehreren Tragelemente angeordnet bzw. gehalten sind.

Der Rahmen kann ein bis vier oder mehr, bevorzugt beabstandete und/oder parallele, zumindest im Wesentlichen vertikale, Eckstützen aufweisen. Außerdem kann der Rahmen, jeweils ein bis vier oder mehr, bevorzugt beabstandete, zumindest im Wesentlichen, horizontale Längsverbindungsstreben und/oder Querverbindungsstreben aufweisen. Dazu kann ein Bodenrahmen vorgesehen sein, der auch die Längsverbindungsstreben aufweisen kann und/oder der bodenseitig mehrere oder alle Eckstützen miteinander verbinden kann.

Insbesondere ist der Rahmen, zumindest im Wesentlichen, bevorzugt durch die Anordnung der Eckstützen, der Längsverbindungsstreben und/oder der Querverbindungsstreben als Würfelkanten, würfelförmig. Bevorzugt sind die Tragelemente, zumindest im Wesentlichen, horizontal und/oder geneigt zwischen vier vertikal angeordneten Eckstützen angeordnet. Die Längsverbindungsstreben und/oder die Querverbindungsstreben können, zumindest im Wesentlichen, parallel und/oder geneigt zu wenigstens einem der Tragelemente oder allen Tragelementen angeordnet sein.

Typischerweise weist jede Aufnahme eine Mittelachse auf, die zumindest im Wesentlichen mittig in der Aufnahme vorgesehen ist. Die Aufnahmen bzw. die Mittelachsen sind bevorzugt, zumindest im Wesentlichen, vertikal ausgerichtet, insbesondere gegenüber dem Boden und/oder gegenüber dem Tragelement. Die Aufnahme kann durch eine Ausnehmung und/oder einen Durchbruch des Tragelements und/oder durch in das Tragelement eingesetzte Teile bzw. Bestandteile des Tragelements, wie einen Köcher, gebildet und/oder verstärkt sein.

Es ist also in anderen Worten in einer ersten Alternative vorgesehen, dass bei einem Tragelement drei direkt nebeneinander angeordnete Mittelachsen dreier Aufnahmen dieses Tragelements unterschiedlich weit voneinander beabstandet sind, so dass also der Abstand von der ersten zu der zweiten Mittelachse ein anderer ist, als der Abstand von der zweiten zu der dritten Mittelachse. Dabei ist die zweite Mittelachse als zwischen der ersten und der dritten Mittelachse angeordnet zu verstehen, wonach dann die drei Mittelachsen als unmittelbar benachbart gelten sollen. Hierdurch entsteht der Vorteil, dass kleine und große Werkzeuge in einem einzigen Tragelement, insbesondere in einer einzigen Vorrichtung, platzsparend, bevorzugt eng beieinander, untergebracht werden können. Der Abstand der Mittelachsen - und somit der Abstand der Aufnahmen - kann also an den Platzbedarf der dort einzusteckenden Werkzeuge individuell angepasst werden. Es resultiert der Effekt, dass radial schmale Werkzeuge neben radial eher breiten Werkzeugen platziert werden können, wobei dennoch keine große Lücke zwischen den Werkzeugen entstehen muss. Letztlich wird die "Packungsdichte" von Werkzeugen in dem Vorrichtungsvolumen optimiert.

Alternativ oder ergänzend ist in anderen Worten vorgesehen, dass bei zwei unmittelbar übereinander angeordneten Tragelementen die Mittelachsen von den Aufnahmen von einem der beiden Tragelemente quer zu der Erstreckungsrichtung bzw. in radialer Richtung der Mittelachsen beabstandet sind von den Mittelachsen der Aufnahmen von dem anderen der beiden Tragelemente. Die Mittelachsen des genannten oberen Tragelements sollen also insbesondere nicht koaxial zu den bzw. zumindest im Wesentlichen radial verschoben zu den Mittelachsen des genannten unteren Tragelements verlaufen. Damit ist zu einer beliebigen Mittelachse bzw. Aufnahme in dem einen Tragelement eine oberhalb oder unterhalb unmittelbar nächstgelegene Mittelachse bzw. Aufnahme, insbesondere in einer horizontalen Richtung, stets seitlich versetzt angeordnet. Damit können die in den Aufnahmen aufbewahrten Werkzeuge, zumindest im Wesentlichen, sowohl in die horizontale, als auch in die vertikale Richtung der Vorrichtung sehr platzsparend angeordnet werden, da ein Werkzeug mit seinen beiden Enden "zwischen" darüber und darunter angeordnete Werkzeuge angeordnet sein kann.

Insgesamt resultiert also aus der vorgeschlagenen Lösung, dass die Vorrichtung mehr Werkzeuge bei geringerem Platzbedarf aufnehmen kann. Mithin resultiert aus dichter gepackten Werkzeugen der Effekt, dass zum Erreichen der Aufnahmen bzw. der Werkzeuge geringere Wege zurückzulegen sind. Zudem müssen keine benötigten Werkzeuge außerhalb der Vorrichtung abgelegt werden, da die Aufnahmekapazität sehr hoch ist. Hierdurch werden die Werkzeugwechselzeit und die Rüstzeit verringert. Ein weiterer Effekt besteht darin, dass die Tragelemente und auch der Rahmen unter einem geringeren Materialaufwand herstellbar sind als bei Vorrichtungen mit vergleichbarer Aufnahmekapazität. Versuche haben gezeigt, dass aus den erfindungsgemäßen Merkmalen resultiert, dass der Energieverbrauch in der Praxis deutlich reduziert werden kann. Normalerweise müssen mehrere Werkzeuge für jede individuelle Bearbeitungsaufgabe aus einem Lager (z.B. einem Schrank) zur Werkzeugmaschine gebracht werden. Die Vorrichtung ermöglicht nun, alle benötigten Werkzeuge jederzeit in unmittelbarer Nähe der Werkzeugmaschine bereitzuhalten. Das heißt für eine neue Bearbeitungsaufgabe muss meist kein neues Werkzeug aus dem Lager herbei geholt werden. Auch das vorher genutzte Werkzeug kann in der Vorrichtung aufbewahrt werden. Das reduziert die Nebenzeiten in der Fertigung und damit den Energieverbrauch in Form von umgesetzter elektrischer Energie für betriebsbereite Werkzeugmaschinen.

Beispielsweise können ohne die erfindungsgemäße Vorrichtung acht Werkzeuge innerhalb von 56 Minuten (7 Minuten pro Werkzeug) bis ca. 120 Minuten (15 Minuten pro Werkzeug) gewechselt werden. Demgegenüber können mit der erfindungsgemäßen Vorrichtung acht Werkzeuge in 4 Minuten (30 Sekunden pro Werkzeug) bis ca. 6 Minuten (45 Sekunden pro Werkzeug) gewechselt werden. Wenn eine Werkzeugmaschine im betriebsbereiten Zustand 3 kW elektrische Energie sowie 220 l/min Druckluft verbraucht, wobei die Druckluft von einem Kompressor bei einer elektrischen Leistungsaufnahme von 2,04 kW erzeugt wird, werden insgesamt 5,04 kW an elektrischer Leistung aufgenommen. In der durch die Vorrichtung eingesparten Zeit von mindestens 52 Minuten wird also die elektrische Leistung für die Betriebsbereitschaft der Werkzeugmaschine in Höhe von 5,04 kW nicht mehr benötigt. Im Ergebnis können in dem Beispiel daher mindestens 4,368 kWh Energie sowie mindestens 52 Minuten Arbeitszeit eingespart werden.

Nach einer Ausgestaltung der Vorrichtung ist vorgesehen, dass bei wenigstens einem Tragelement die Mittelachsen der Aufnahmen in wenigstens einer, bevorzugt zwei oder drei, Längsreihe und/oder in wenigstens einer, bevorzugt acht, Querreihe verteilt angeordnet sind, und, vorzugsweise, wobei eine Längsreihe und/oder eine Querreihe wenigstens zwei der Mittelachsen aufweist, und/oder die Längsreihen quer zur Erstreckung der Längsreihen voneinander beabstandet sind, und/oder die Querreihen quer zur Erstreckung der Querreihen voneinander beabstandet sind. Eine Längsreihe und/oder eine Querreihe weisen jeweils/weist insbesondere wenigstens zwei der Mittelachsen auf. Die Längsreihen sind bevorzugt quer zur Erstreckung der Längsreihen voneinander beabstandet. Die Querreihen sind bevorzugt quer zur Erstreckung der Querreihen voneinander beabstandet. Eine Längsreihe in einem Tragelement verläuft bevorzugt quer, also zumindest im Wesentlichen senkrecht, zu einer Querreihe in diesem Tragelement. Es ist jedoch auch möglich, dass die Längsreihe schräg zur Querreihe verläuft. Insbesondere verlaufen die Längsreihe und/oder die Querreihe, zumindest im Wesentlichen, in einer Fläche und/oder Ebene des Tragelements. Ausgeschlossen ist es dabei aber nicht, dass das Tragelement uneben ausgebildet ist, wobei die Längsreihe und/oder die Querreihe dennoch vorgesehen sein können/kann. Längsreihe(n) und Querreihe(n) sind bevorzugt regelmäßig, symmetrisch und/oder schachbrettartig zueinander angeordnet.

Unter einer Reihe von Mittelachsen, insbesondere der Längsreihe bzw. der Querreihe, wird verstanden, dass mehrere Mittelachsen aufgereiht und/oder nacheinander, insbesondere, zumindest im Wesentlichen, parallel und radial beabstandet, angeordnet sind. Die Reihe folgt, zumindest im Wesentlichen, einer Richtung bzw. einer Erstreckungsrichtung. Die Mittelachsen der Reihe müssen also nicht zwangsläufig exakt auf einer Geraden liegen und/oder in einer z.B. vertikalen Ebene angeordnet sein, sondern sie können mit einer Abweichung in radialer Richtung von der Geraden und/oder der Ebene entlang ihrer Abfolge dennoch die Reihe ausbilden.

Vorzugsweise sind entlang einer Längsreihe - oder auch entlang einer Querreihe - wenigstens drei oder auch vier, insbesondere nacheinander angeordnete, Mittelachsen voneinander unterschiedlich beabstandet. Aus der Verwendung der Längsreihe bzw. der Querreihe resultiert, dass die Mittelachsen bzw. die Aufnahmen sehr systematisch und einfach zugänglich angeordnet sind. Es kann eine hohe Packungsdichte von Werkzeugen erreicht werden.

Gemäß einer Weiterbildung der Vorrichtung ist vorgesehen, dass, bei wenigstens einem Tragelement, die Mittelachsen der Aufnahmen in wenigstens einer Längsreihe in radialer Richtung um einen ersten Längsabstand, einen zweiten Längsabstand oder einen dritten Längsabstand beabstandet sind, dass, vorzugsweise, mehrere Mittelachsen der Aufnahmen in der Längsreihe unmittelbar nacheinander in radialer Richtung um den ersten Längsabstand und dass, weiter vorzugsweise, mehrere Mittelachsen der Aufnahmen in der Längsreihe nacheinander in radialer Richtung um den zweiten Längsabstand beabstandet sind. Zwischen den Mittelachsen mit dem ersten Längsabstand und den Mittelachsen mit dem zweiten Längsabstand kann der dritte Längsabstand vorgesehen sein, und zwar bevorzugt in radialer Richtung. Die ersten, zweiten und dritten Längsabstände weichen insbesondere voneinander ab. In anderen Worten kann die Längsreihe - aber auch die Querreihe - mit einer "Schrittweite" von einer Mittelachse zur nächsten Mittelachse innerhalb eines Trageelements versehen sein, die innerhalb der Reihen unterschiedlich groß ausfällt. In einem ersten Abschnitt einer Längsreihe kann also eine geringere Schrittweite bzw. ein erster Längsabstand - zwischen mehreren, beispielsweise vier - Mittelachsen vorgesehen sein, als in einem zweiten Abschnitt einer Längsreihe in demselben Tragelement, in dem ein zweiter Längsabstand als Schrittweite vorgesehen sein kann. Dabei können die beiden Abschnitte voneinander um eine dritte Schrittweite, insbesondere um den dritten Längsabstand, beabstandet sein. Durch unterschiedliche Längsabstände in der Längsreihe können in radialer Richtung unterschiedlich dimensionierte Werkzeuge in die Aufnahmen eingesetzt werden, ohne unnötig freien Platz zu verschwenden. Es ist zum Erreichen einer dichten Packung der Werkzeuge bevorzugt, wenn mehrere dieser Längsreihen nebeneinander angeordnet sind und dadurch zugleich die Querreihen ausgebildet werden. Dabei ist es letztlich auch möglich, wenn mehr als zwei Abschnitte und/oder unterschiedliche Schrittweiten und/oder Längsabstände in einer Reihe bzw. Längsreihe und/oder Querreihe vorgesehen sind.

Nach einer Ausgestaltung der Vorrichtung ist vorgesehen, dass wenigstens ein Tragelement, insbesondere in dem Rahmen, entlang einer Verschieberichtung verschiebbar ist, wobei die Verschieberichtung in einem Winkel von bis zu +/- 45°, insbesondere bis zu +/- 10° gegenüber einer horizontalen Ebene und/oder einer ersten und/oder zweiten horizontalen Richtung verläuft, vorzugsweise wobei die Verschieberichtung, zumindest im Wesentlichen, in einer horizontalen Ebene und/oder entlang der Querreihe verläuft. Insbesondere ist also wenigstens ein Tragelement in dem Rahmen im Sinne einer Schublade eines Schrankes entlang der Verschieberichtung verschiebbar bzw. auch ausziehbar. Bevorzugt ist es so, dass das Tragelement und/oder die Mittelachsen der Aufnahmen des Tragelements nicht - oder zumindest nicht Wesentlich - über die Erstreckung des Rahmens in einer horizontalen Ebene hinaus verschiebbar ist, um beispielsweise ein Umkippen der Vorrichtung zu vermeiden. Hierzu kann das Tragelement in der Verschieberichtung an Anschlägen des Rahmens anschlagen. Die Verschieberichtung kann horizontal oder aber nach oben oder nach unten weisend, insbesondere um bis zu +/- 45°, ausgerichtet sein. Dabei ist das Trägerelement jedoch bevorzugt, aber nicht zwingend, quer zur Verschieberichtung, zumindest im Wesentlichen, horizontal, insbesondere in dem Rahmen, angeordnet.

Besonders bevorzugt verläuft die Verschieberichtung, zumindest im Wesentlichen, entlang der Querreihe oder der Längsreihe. In die Verschieberichtung kann ein verschiebbares Tragelement insbesondere derart weit verschoben werden, dass das unmittelbar darüber angeordnete Tragelement das verschobene Trageelement, zumindest im Wesentlichen, nicht mehr bedeckt, wodurch beispielsweise aus der Draufsicht auf die beiden Tragelemente alle Aufnahmen der Trageelemente nach oben zugänglich gemacht werden können. Es kann vorteilhaft bei zwei unmittelbar übereinander angeordneten, verschiebbaren Trageelementen eine einfache Entnahme bzw. ein einfaches Einsetzen von Werkzeugen erreicht werden und zugleich ein sicherer Stand der Vorrichtung gewährleistet werden. Die notwendige Verschiebung zum Zugriff auf die Aufnahmen fällt dann nämlich sehr gering aus. Besonders vorteilhaft ist es, wenn das oder die unterste(n) und/oder das oder die oberste(n) Tragelement(e) nicht in der Verschieberichtung verschiebbar angeordnet sind und/oder fest in dem Rahmen gehalten sind. Ein Verschieben der in vertikaler Richtung äußeren Tragelemente ist nämlich meist nicht notwendig und spart mithin Aufwand bei der Herstellung der Vorrichtung, da durch die Tragelement selbst bereits eine strukturelle Stabilisierung der Vorrichtung erreicht werden kann.

Gemäß einer weiteren Ausgestaltung der Vorrichtung sind die Mittelachsen der Aufnahmen von zwei unmittelbar übereinander angeordneten Trageelementen derart versetzt zueinander angeordnet, dass wenigstens eines der beiden unmittelbar übereinander angeordneten Tragelemente, insbesondere mit eingesetzten Werkzeugen, kollisionsfrei in der Verschieberichtung verschiebbar sind. Beispielsweise ist/sind entlang einer Längsreihe des oberen Tragelements zwischen zwei unmittelbar aufeinander folgenden Mittelachsen eine - oder auch mehrere - Mittelachse(n) des unteren Tragelements angeordnet, oder auch umgekehrt bezüglich oberem und unterem Tragelement. Dabei ist die untere/obere Mittelachse insbesondere, zumindest im Wesentlichen, mittig zwischen den beiden nächstgelegenen oberen/unteren Mittelachsen, insbesondere entlang einer oder beiden der Längsreihen bzw. der Erstreckungsrichtung, angeordnet. Demnach kann ein verschiebbares Tragelement in zumindest im Wesentlichen vertikaler Richtung sehr nahe an das unmittelbar obere und/oder untere nächstgelegene Tragelement angeordnet werden. Die versetzten Mittelachsen führen nämlich dazu, dass die Werkzeuge weniger wahrscheinlich mit den nächstgelegenen Werkzeugen kollidieren können.

Bei einer weiteren Ausgestaltung der Vorrichtung ist vorgesehen, dass wenigstens zwei oder drei Tragelemente nicht verschiebbar im Rahmen angeordnet sind und/oder, zumindest im Wesentlichen, in gleicher Höhe und/oder nebeneinander im Rahmen angeordnet sind. Insbesondere können zwei gleiche oder unterschiedliche Tragelemente, zumindest näherungsweise, beispielsweise in einer horizontalen Ebene, benachbart angeordnet sein. Die Tragelemente können dabei fest im Rahmen angeordnet sein und/oder die untersten oder die obersten Tragelemente sein. Insbesondere wenn nicht alle Tragelemente verschiebbar sind und/oder die Tragelemente gleich oder ähnlich ausgebildet sind, können Kosten gespart werden. Zudem liegt ein Vorteil nicht verschiebbarer Tragelemente darin, dass sie zur Versteifung der Vorrichtung beitragen können.

Nach einer weiteren Ausbildung der Vorrichtung ist vorgesehen, dass ein Tragelement nicht verschiebbar im Rahmen angeordnet ist und/oder zwei, drei, vier, fünf oder mehr Längsreihen aufweist. Insbesondere kann ein einzelnes Tragelement ganz oben oder ganz unten in dem Rahmen angeordnet sein. Bevorzugt weist das oberste Tragelement drei und/oder das unterste Tragelement fünf Längsreihen auf. Es ist nämlich eine eingeschränkte Zugänglichkeit auf das oder die Tragelemente unterhalb von dem obersten Tragelement gegeben, weshalb das oberste Tragelement weniger Mittelachsen, Längsreihen und/oder Querreihen als ein darunter angeordnetes und/oder das unterste Tragelement haben kann. Dadurch können Werkzeuge mit sehr guter Ergonomie entnommen werden und unter geringem Platzbedarf aufbewahrt werden.

Bei einer weiteren Ausgestaltung der Vorrichtung ist vorgesehen, dass wenigstens ein Tragelement aus zumindest einem Flachmaterial, bevorzugt Blech, hergestellt ist, wobei das Flachmaterial und/oder das Tragelement Durchbrüche als oder für die Aufnahmen und/oder verstärkte Ränder, insbesondere zum Befestigen an und/oder in dem Rahmen, aufweist. Ein Tragelement kann aus einem flachen Halbzeug, wie einem Blech aus Metall bzw. Metallblech, hergestellt sein. Es können beispielsweise aus dem Flachmaterial die Durchbrüche/Ausnehmungen als Bestandteile der oder für die Aufnahmen herausgearbeitet, insbesondere herausgeschnitten oder herausgestanzt, sein. Die Aufnahmen können also, zumindest teilweise, durch die Durchbrüche/Ausnehmungen gebildet sein. Die Durchbrüche/Ausnehmungen können eine zentral angeordnete Mittelachse aufweisen und/oder mit der Mittelachse der Aufnahme, zumindest im Wesentlichen, zusammenfallen. Eine Aufnahme kann schließlich einfach mittels im Bereich des Durchbruchs/der Ausnehmung angeordneten Teilen wie einem eingesetzten Köcher ausgebildet sein. Mit dem Köcher wird letztlich auch ermöglicht, unterschiedliche Werkzeugaufnahmen einsetzbar zu machen, ohne die gesamte Vorrichtung bzw. die Trägerelemente stark abändern zu müssen.

Weiter kann das Flachmaterial bzw. das Tragelement, insbesondere an seinen Rändern und/oder Randbereichen, verstärkt sein, beispielsweise durch Umlegen, Umfalten und/oder Abkanten des Flachmaterials. Wenn beispielsweise das Flachmaterial bzw. das Tragelement zumindest im Wesentlichen rechtwinklig, also etwa horizontal und vertikal, in seinem Randbereich verlaufend ausgestaltet ist, wird eine sehr hohe Steifigkeit des hergestellten Tragelements erreicht. Das Tragelement kann, zumindest im Wesentlichen, insbesondere abschnittsweise, trapezförmig, quadratisch und/oder rechteckig ausgestaltet sein. Dann können zwei, drei oder vier der Ränder sehr einfach und effektiv verstärkt sein. Insbesondere verlaufen die Ränder bzw. die Randbereiche in dem Rahmen der Vorrichtung, zumindest im Wesentlichen, horizontal und/oder zwischen zwei Eckbereichen des Rahmens. An ein, zwei oder mehr der Ränder bzw. Randbereiche können Führungen des Tragelements für die Erreichung der Verschiebbarkeit in die Verschieberichtung angeordnet sein, wobei die Führungen des Tragelements mit Führungen des Rahmens zusammenwirken können. Mit den wie vorgenannt ausgestalteten Rändern bzw. Randbereichen kann eine einfache und sichere Montierbarkeit in dem Rahmen gewährleistet werden, da einfache Schraubverbindungen bereits ausreichend sein können und beispielsweise auf aufwendige Schweißverbindungen verzichtet werden kann. Des Weiteren ist ein Tragelement mit den wie vorgenannt ausgestalteten Rändern bzw. Randbereichen kostengünstig, insbesondere integral, zu fertigen und es kann im Tragelement selbst, zumindest weitgehend, auf Schweißverbindungen und/oder Schraubverbindungen verzichtet werden.

Bei einer weiteren Ausgestaltung der Vorrichtung ist vorgesehen, dass die Aufnahmen jeweils einen Köcher mit einer, zumindest im Wesentlichen, konischen Innenfläche aufweisen und/oder jeweils durch einen Köcher mit einer, zumindest im Wesentlichen, konischen Innenfläche gebildet sind. Da bereits die Werkzeugaufnahmen meist eine konische Außenfläche aufweisen, können die Werkzeugaufnahmen sicher in die Aufnahmen bzw. in den Köcher eingesetzt werden. Der Köcher kann, zumindest im Wesentlichen, rotationssymetrisch ausgebildet sein und eine Mittelachse aufweisen, die zu der Mittelachse der Aufnahme koaxial oder, zumindest im Wesentlichen, parallel ausgerichtet sein kann. Dabei kann der Köcher einen insbesondere außenseitigen Vorsprung aufweisen, der, in das Tragelement und/oder in einen Durchbruch eingesetzt, als Bajonettverschluss entlang der Mittelachse des Köchers und/oder als Verdrehsicherung wirken kann. Insbesondere sind zwei oder mehr insbesondere außenseitige Vorsprünge, vorzugsweise wenigstens teilweise gegenüberliegend vorgesehen. Der Vorsprung kann derart ausgestaltet, insbesondere angeschrägt, sein, dass ein Verdrehen des Köchers, beispielsweise um die Mittelachse des Köchers, im Tragelement bzw. im Durchbruch ein Verklemmen bzw. Lösen des Köchers hervorrufen kann. Es kann ferner wenigstens ein insbesondere außenseitiges Montageelement, vorzugsweise vier oder mehr Montageelemente, am Köcher vorgesehen sein, die beispielsweise vom Köcher nach außen vorstehen um ein Ansetzen eines Montagewerkzeugs zu ermöglichen, insbesondere um den Köcher entgegen einer Klemmkraft gegenüber dem Tragelement bzw. Durchbruch zu verdrehen. Das oder die Montageelemente kann/können um die Mittelachse des Köchers, insbesondere gleichmäßig, verteilt außen am Köcher vorgesehen sind.

Die Innenfläche des Köchers ist bevorzugt zum Einsetzen von Werkzeugaufnahmen vom Typ SK, insbesondere SK 30, SK 40, SK 50 und/oder vom Typ HSK, insbesondere HSK 80, HSK 63 und/oder HSK 50, ausgebildet. Alternativ oder ergänzend ist die Innenfläche zum Einsetzen von Werkzeugaufnahmen vom Typ VDI, insbesondere VDI 16, VDI 20 und/oder VDI 25, ausgebildet. SK steht für Steilkegel und ist genormt z.B. nach DIN ISO 7388. HSK steht für Hohlschaftkegel und ist z.B. genormt nach DIN 69893. VDI ist ein Aufnahmesystem für Drehmaschinen sowohl mit angetriebenen Werkzeugen und auch ohne angetriebene Werkzeuge und ist z.B. genormt nach DIN 69880 / VDI 3425. Damit werden die meisten typischen Werkzeugaufnahmen abgebildet. Die Innenfläche ist demnach korrespondierend zur Außenfläche ausgebildet, beispielsweise mit einem zumindest im Wesentlichen gleichen oder, bevorzugt um bis zu 10 %, voneinander abweichenden, Konuswinkel. Vorteilhaft bei der Nutzung von Köchern ist eine leichte Auswechselbarkeit der Köcher, um unterschiedliche Werkzeugaufnahmen bzw. Typen von Werkzeugaufnahmen einsetzen zu können.

Bevorzugt ist der Konuswinkel der Innenfläche gleich oder ungleich, insbesondere größer als der Konuswinkel der Außenfläche der jeweiligen Werkzeugaufnahme des (insbesondere eingesetzten und/oder einzusetzenden) Werkzeugs. Damit wird erreicht, dass die Werkzeugaufnahmen im Bereich des Konus nicht flächig, sondern eher kreislinienförmig, punktuell oder auch gar nicht, anliegen und deutlich seltener oder auch gar nicht festkleben, beispielsweise durch vermiedene Adhäsion von anhaftenden Fluiden wie des zuvor bei einer Bearbeitungsaufgabe verwendeten Schmierstoffs.

Vorzugsweise ist oberhalb von der Innenfläche, insbesondere angrenzend an die Innenfläche, ein, zumindest im Wesentlichen, zylindrischer Abschnitt vorgesehen. Mit dem zylindrischen Abschnitt kann eine (insbesondere eingesetzte und/oder einzusetzende) Werkzeugaufnahme zentriert werden. Der zylindrische Abschnitt kann einen Durchmesser aufweisen, der im Wesentlichen dem größten Durchmesser einer Außenfläche einer korrespondierenden Werkzeugaufnahme entspricht oder etwas größer als diese ist. Bevorzugt ist ein Durchmesser des zylindrischen Abschnitts vorgesehen, der ca. 0,5 % bis 2 % größer ist als der Durchmesser der einzusetzenden und/oder eingesetzten Werkzeugaufnahme. Der zylindrische Abschnitt kann für einen minimalen Abstand von der Außenfläche zu der Innenfläche sorgen, damit ein Verklemmen bzw. Verkleben der Werkzeugaufnahme im Köcher verhindert werden kann. Der zylindrische Abschnitt weist insbesondere eine Abschnittshöhe auf, die entlang der Mittelachse des Köchers bemessen ist, die bis zu 10 %, insbesondere im Bereich von 5 % bis 8 %, bevorzugt ca. 7 %, bezogen auf den Durchmesser des zylindrischen Abschnitts beträgt.

Weiter bevorzugt ist eine bzw. die Mittelachse des Köchers von der Innenfläche und/oder von dem zylindrischen Abschnitt umgeben. Bevorzugt fällt die Mittelachse des Köchers, zumindest im Wesentlichen, mit der Mittelachse der Aufnahme zusammen bzw. ist koaxial zu dieser ausgerichtet. Die Werkzeugaufnahmen können also nicht nur entlang die Mittelachsen der Aufnahmen, sondern auch entlang der Mittelachsen der Köcher in die Tragelemente eingesetzt werden.

Möglich ist ferner, dass der Köcher, insbesondere oberseitig und/oder auf einem Absatz angeordnete, Beabstandungselemente aufweist, die zur, insbesondere punktuellen, Auflage einer eingesetzten und/oder einzusetzenden Werkzeugaufnahme vorgesehen sind, vorzugsweise wobei erste Beabstandungselemente in radialer Richtung ferner von der Mittelachse des Köchers angeordnet sind als zweite Beabstandungselemente. Die Beabstandungselemente sollen dafür sorgen, dass die Werkzeugaufnahme nicht großflächig auf dem Köcher aufliegt, sondern möglichst kleinflächig, bevorzugt punktuell. Daher können die Beabstandungselemente linsenförmig bzw. kugelabschnittsförmig ausgebildet sein und/oder mit einem stumpfen, punktuellen und/oder spitzen Ende nach oben weisen. Zweckdienlich ist, wenn ein kugelabschnittsförmiges Beabstandungselement im Querschnitt entlang der Mittelachse des Köchers einen Radius von ca. 4 % des Durchmessers des zylindrischen Abschnitts bzw. des größten Durchmessers einer einzusetzenden und/oder eingesetzten Werkzeugaufnahme aufweist, insbesondere einen Radius von 1,75 mm. Es können mehrere, z.B. sechs, erste Beabstandungselemente gleichmäßig verteilt und gleich beabstandet um die Mittelachse des Köchers angeordnet sein. Darüber hinaus können mehrere, z.B. sechs, zweite Beabstandungselemente gleichmäßig verteilt und gleich beabstandet, aber geringer beabstandet als die ersten Beabstandungselemente von der Mittelachse des Köchers, um die Mittelachse des Köchers angeordnet sein. Damit können dann große und auch kleine Werkzeugaufnahmen mit nur einer einzigen Aufnahme gestützt werden, wobei die Auflast punktuell und sehr gleichmäßig verteilt werden kann. Weiter kann der Köcher, insbesondere können mehrere oder die Beabstandungselemente, vorzugsweise die ersten und/oder zweiten Beabstandungselemente, magnetunterstützt ausgebildet sein. Der Köcher und/oder die Beabstandungselemente können/kann hierzu einen Magnet aufweisen oder daraus gebildet sein, um nicht nur eine Auflagefläche für eine Werkzeugaufnahme darzustellen, sondern um auch eine Haltekraft auf die Werkzeugaufnahme auszuüben.

Nach einer weiteren Ausgestaltung der Vorrichtung ist vorgesehen, dass die Tragelemente jeweils den Aufnahmen zugeordnete Kennzeichnungsbereiche aufweisen, wobei die Kennzeichnungsbereiche vorzugsweise zum lösbaren, insbesondere magnetunterstützten, Anordnen von einer Kennzeichnung je Aufnahme vorgesehen sind. Die Kennzeichnungsbereiche können unmittelbar neben bzw. vor den einzelnen Aufnahmen angeordnet sein, insbesondere in Reihen z.B. entlang der Aufnahmen, um den Aufnahmen eine bedarfsweise Zuordnung geben zu können. Die Aufnahmen können veränderbar beschriftet werden. Beispielsweise kann in dem Kennzeichnungsbereich eine Kennzeichnung, z.B. ein Schild, mit einer Aufschrift für das jeweilige Werkzeug angeordnet werden. Die Kennzeichnungen und/oder die Kenzeichnungsbereiche können magnetisierbar und/oder magnetisiert sein. Die Kennzeichnungen können alternativ oder ergänzend insbesondere formschlüssig steckbar, z.B. in Bohrungen und/oder an Vorsprüngen, in die Kennzeichnungsbereiche ausgebildet sein. Insgesamt wird eine rasch erkennbare und einfach änderbare Kennzeichenbarkeit einzelner Aufnahmen ermöglicht, die den Arbeitsablauf bei der Verwendung der Vorrichtung erleichtert.

Eine weitere Ausgestaltung der Erfindung sieht vor, dass der Rahmen, insbesondere unterseitige und/oder blockierbare Rollen aufweist, wobei, vorzugsweise, wenigstens eine der Rollen durch ein Betätigungsmittel blockierbar ist, und wobei, weiter vorzugsweise, das Betätigungsmittel oberhalb von den Rollen und/oder am Rahmen und/oder an der Oberseite des Rahmens angeordnet ist. In anderen Worten ist hiermit die Vorrichtung selbst verschiebbar ausgestaltet, und zwar mittels bodenseitiger Rollen, die bedarfsweise auch blockierbar sind. Die Rollen können insbesondere um eine vertikale Achse schwenken bzw. drehen und/oder um eine horizontale Achse abrollen, womit die Vorrichtung selbst um eine vertikale Achse verdreht und/oder horizontal verschoben werden kann. Die Drehbarkeit der Vorrichtung hat beispielsweise den Vorteil, dass die Werkzeuge von allen Seiten gut erreichbar sind. Wenn beispielsweise vier Rollen vorgesehen sind, wobei die vier Rollen beispielsweise an vier unterseitigen Ecken des Rahmens und/oder des Bodenrahmens, insbesondere an oder im Bereich von den Eckstützen, angeordnet sind, wird ein sehr stabiler Stand der Vorrichtung erreicht. Soweit ein, zwei oder mehr der Rollen blockierbar ausgebildet sind, kann die Vorrichtung sicher platziert und gegen versehentliches Verschieben, insbesondere bei der Entnahme oder beim Einsetzen von Werkzeugen, geschützt werden. Hier bietet es sich besonders an, wenn zwei Rollen in ihrer vertikalen Achse gegen das Schwenken und/oder in ihrer mithin schwenkbaren horizontalen Achse gegen das Rollen blockiert werden können. Insbesondere kann zum Blockieren ein Betätigungsmittel vorgesehen sein, das oberhalb von der oder den jeweilig blockierbaren Rolle(n) angeordnet ist. Meist wird je blockierbarer Rolle ein Betätigungsmittel oberhalb von der Rolle, insbesondere oben am Rahmen, vorgesehen sein. Bei dem Betätigungsmittel kann es sich um einen Schalter oder einen Hebel handeln, der wenigstens zwischen einer Freigabestellung und einer Blockierstellung verstellbar ist. So kann mit ergonomisch günstigen Handgriffen, beispielsweise in Brusthöhe von einem Nutzer, ein Blockieren der Rollen der Vorrichtung erreicht werden und die Verletzungsgefahr, beispielsweise durch Umkippen oder Wegrollen der Vorrichtung, reduziert werden.

Besonders bevorzugt sind zwei der Rollen blockierbar ausgebildet. Insbesondere sind zwei der Rollen blockierbar ausgebildet, die nicht den geringsten Abstand der Abstände aller Rollen untereinander haben. Beispielsweise liegen die blockierbaren Rollen im Wesentlichen gegenüberliegend jeweils im Bereich unterhalb von den beiden Enden von einer Längsreihe. Es können also die beiden vorderen oder die beiden hinteren Rollen - blockierbar ausgebildet sein. Dadurch wird ein hoher Widerstand bzw. eine hohe Widerstandskraft sowohl gegen das Verdrehen der Vorrichtung auf dem Boden, also auch gegen das Verschieben der Vorrichtung auf dem Boden erreicht. Damit kann die Vorrichtung sicher verwendet werden. Wenn nämlich nur zwei Rollen blockierbar sind, die sehr nahe beieinander sind, wird insbesondere der Widerstand gegenüber dem Verdrehen der Vorrichtung verringert.

Die Erfindung wird nachfolgend anhand einer lediglich ein bevorzugtes Ausführungsbeispiel darstellenden Zeichnung näher erläutert. In der Zeichnung zeigen:
- Fig. 1A-B:: eine erfindungsgemäße Vorrichtung mit in Aufnahmen von sechs Tragelementen eingesetzten Werkzeugen und mit zwei jeweils verschobenen Tragelementen in einer perspektivischen Ansicht,
- Fig. 1C:: die Vorrichtung der Fig. 1A-B in einer Vorderansicht,
- Fig. 2A:: ein Flachmaterial für ein Tragelement in einer perspektivischen Ansicht,
- Fig. 2B:: ein aus dem Flachmaterial aus Fig. 2A hergestelltes Tragelement der Vorrichtung aus Fig. 1A-C mit zwei Längsreihen und acht Querreihen von Aufnahmen mit ausgeblendeten Köchern in einer perspektivischen Ansicht,
- Fig. 3A-B:: einer der Köcher aus Fig. 1A-C in einer perspektivischen Ansicht und in einer geschnittenen Seitenansicht,
- Fig. 4A:: eines der in einer Werkzeugaufnahme gehaltenen Werkzeuge aus Fig. 1A-C in einer perspektivischen Ansicht,
- Fig. 4B:: die Werkzeugaufnahme aus Fig. 4A in einer geschnittenen Seitenansicht mit teilweise ausgeblendeten Teilen, und
- Fig. 5:: die in den Köcher aus Fig. 3A-B eingesetzte Werkzeugaufnahme aus Fig. 4B.

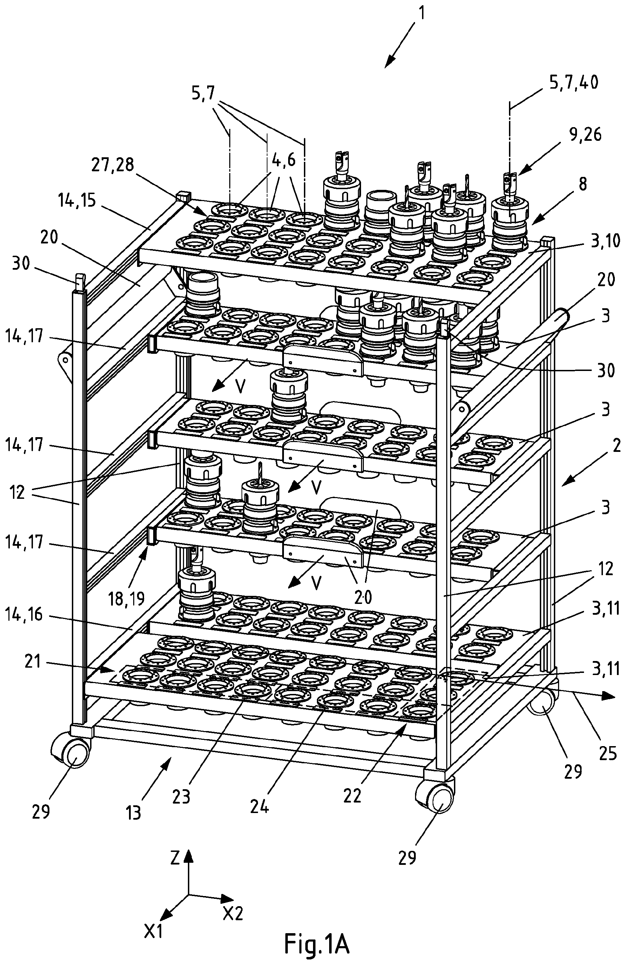

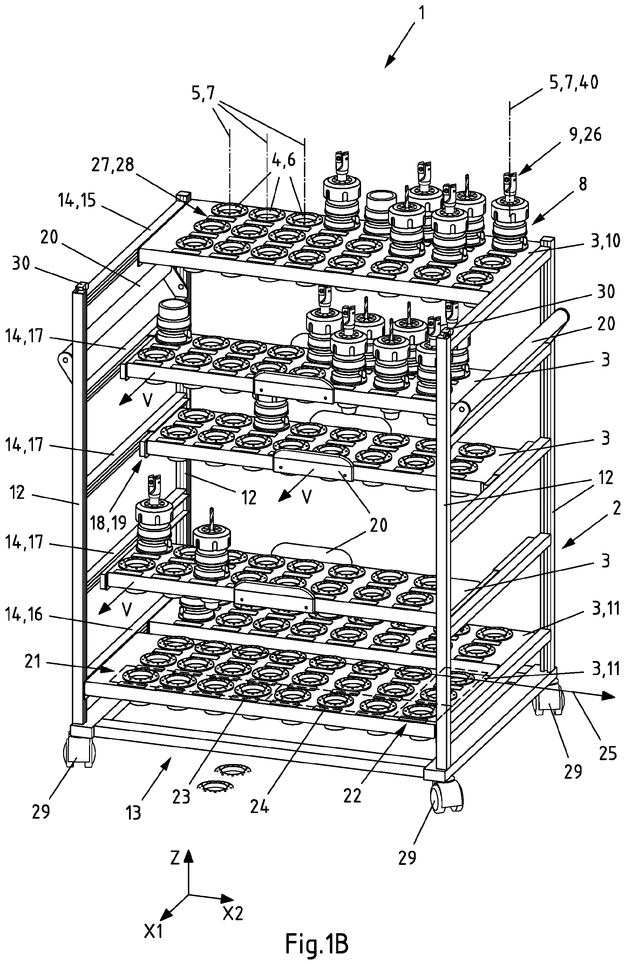

In Fig. 1A und Fig. 1B ist eine erfindungsgemäße Vorrichtung 1 mit sechs in einem Rahmen 2 gehaltenen Tragelementen 3, 10, 11 dargestellt. Die sechs Tragelemente 3, 10, 11 weisen vorliegend sechzehn bzw. vierundzwanzig Aufnahmen 4 mit jeweils im Wesentlichen zentralen Mittelachsen 5 auf. Die Vorrichtung 1 weist in der dargestellten Ausgestaltung, aber nicht zwingend, mit ihren sechs Tragelementen 3, 10, 11 insgesamt einhundertzwölf Aufnahmen 4 auf. Die Aufnahmen 4 weisen jeweils einen Köcher 6 auf, der mit seiner Mittelachse 7 koaxial zur Mittelachse 5 der Aufnahme 4 ausgerichtet ist. Die Aufnahmen 4 sind zum Einsetzen von einzelnen in einer Werkzeugaufnahme 8 gehaltenen Werkzeugen 9 ausgebildet. In die Aufnahmen 4 der Tragelemente 3, 10, 11 sind in der dargestellten Vorrichtung 1 lediglich beispielhaft neunzehn Werkzeuge 9 verteilt eingesetzt. Nicht dargestellt, aber ebenso möglich ist es, dass das Einsetzen der Werkzeugaufnahmen 8 direkt in das Tragelement 3,10,11 (also ohne zwischenliegenden Köcher 6) erfolgt.

Das oberste Tragelement 3, 10 der Fig. 1A und Fig. 1B weist vierundzwanzig Aufnahmen 4 bzw. Mittelachsen 5 auf und ist starr, also nicht verschiebbar, im Rahmen 2 gehalten. Zudem weisen die beiden untersten, auf gleicher Höhe angeordneten, Tragelemente 3, 11 der sechs Tragelemente 3, 10, 11 sechzehn bzw. vierundzwanzig Aufnahmen 4 auf und sind ebenfalls starr bzw. nicht verschiebbar im Rahmen 2 gehalten. Die drei in vertikaler Richtung Z dazwischen und jeweils übereinander angeordneten Tragelemente 3 sind horizontal in bzw. entgegen einer Verschieberichtung V verschiebbar im Rahmen 2 gehalten und weisen jeweils sechzehn Aufnahmen 4 auf. In Fig. 1B sind drei Tragelemente 3 der Vorrichtung 1 (unterschiedlich weit) in einer ersten horizontalen Richtung X1 bzw. in der Verschieberichtung V verschoben bzw. ausgezogen dargestellt.

In Fig. 1A bis Fig. 1C verläuft die Verschieberichtung V in der bzw. parallel zu der ersten horizontalen Richtung X1. Möglich, aber nicht dargestellt, ist es jedoch auch, dass die Verschieberichtung V gegenüber der ersten horizontalen Richtung X1 bzw. um eine zweite horizontale Richtung X2 geneigt ist, wobei die zweite horizontale Richtung X2 hier quer zur ersten horizontalen Richtung X1 verläuft. Die Verschieberichtung V kann dann schräg nach unten oder schräg nach oben weisen. Alternativ oder ergänzend kann auch die Ausrichtung der Tragelemente 3, 10, 11 gegenüber der ersten horizontalen Richtung X1 und/oder der Verschieberichtung V geneigt sein bzw. um die erste horizontale Richtung X1 geneigt sein. Mit anderen Worten können die Tragelemente 3, 10, 11 schräg angeordnet sein und/oder entlang einer schrägen Richtung ausgezogen werden.

Der in Fig. 1A bis Fig. 1C ersichtliche Rahmen 2 weist vier parallele, vertikale Eckstützen 12 auf, zwischen denen die sich im Wesentlichen bzw. abschnittsweise in jeweils einer horizontalen Ebene erstreckenden Tragelemente 3, 10, 11 angeordnet sind. Fünf der Tragelemente 3, 10, 11 sind jeweils übereinander angeordnet und zwei der Tragelemente 3, 10, 11, hier die untersten beiden Tragelemente 3, 11 sind seitlich bzw. horizontal nebeneinander angeordnet. Bodenseitig ist ein horizontal ausgerichteter Bodenrahmen 13 vorgesehen, an dem die vertikal ausgerichteten Eckstützen 12 befestigt angeordnet sind. Auf der jeweiligen Höhe von jedem der Tragelemente 3, 10, 11 sind jeweils gegenüberliegend zwei Querverbindungsstreben 14, 15, 16, 17 vorgesehen, die sich im Wesentlichen horizontal erstrecken und zwischen denen die Tragelemente 3, 10, 11 angeordnet sind. Die Querverbindungsstreben 14, 15, 16, 17 verbinden jeweils zwei der Eckstützen 12 und dienen auch zum Halten der Tragelemente 3, 10, 11. Die in vertikaler Richtung Z nacheinander zwischen der obersten Querverbindungsstrebe 15 und der untersten Querverbindungsstrebe 16 zwischenliegenden Querverbindungsstreben 17 weisen Führungen 18 der Querverbindungsstreben auf, die korrespondierend zu Führungen 19 der Tragelemente ausgebildet sind, um die Tragelemente 3, beispielsweise schubladenartig, verschiebbar im Rahmen 2 auszugestalten, und zwar in und entgegen der Verschieberichtung V bzw. in der ersten horizontalen Richtung X1. Die Führungen 18, 19 sind vorliegend als zusammenwirkende Schienen ausgebildet. Im oberen Bereich des Rahmens 2 sind an dem Rahmen 2 gegenüberliegende Griffe 20 angeordnet, wobei auch die verschiebbaren Tragelemente 3 in der Verschieberichtung V gegenüberliegende Griffe 20 aufweisen können.

Insgesamt ist die Vorrichtung 1 vorliegend, aber nicht zwingend, im Wesentlichen würfelförmig und somit besonders kompakt ausgebildet, wobei das oberste Tragelement 10, die Eckstützen 12 und der Bodenrahmen 13 im Wesentlichen die Würfelkanten ausbilden. Grundsätzlich bevorzugt ist es auch, dass die Vorrichtung 1 derart ausgestaltet ist, dass bei in der Verschieberichtung V beliebig verschobenen Tragelementen 3 keine der Aufnahmen 4, der Köcher 6, und/oder der Mittelachsen 5, 7 seitlich von der Vorrichtung 1, also insbesondere seitlich über den Rahmen 2, den Bodenrahmen 13 und/oder unterseitige Rollen 29 hinaus vorstehen können. Mit "seitlich" ist insbesondere eine zumindest im Wesentlichen horizontale Richtung, beispielsweise die erste horizontale Richtung X1 und/oder die zweite horizontale Richtung X2, gemeint. Damit kann der Schwerpunkt der gesamten Vorrichtung 1 insbesondere nicht derart ungünstig verlagert werden, dass die Vorrichtung 1 umfallen kann. Hierzu kann wenigstens ein Anschlag am Rahmen 2 und/oder an dem Tragelement 3 zum Anschlagen des Tragelements 3 in und entgegen der Verschieberichtung V vorgesehen sein.

Bei der Vorrichtung 1 ist der Rahmen 2 oberseitig, also gegenüberliegend von dem Bodenrahmen 13, durch das starr angeordnete oberste Trageelement 3, 10 stabilisiert. Das oberste Trageelement 3, 10 ist nämlich fest mit dem Rahmen 2 bzw. mit den obersten Querverbindungsstreben 14, 15 verbunden. Vorliegend ist ferner das unterste, starr angeordnete Tragelement 3, 11 fest mit dem Rahmen 2 bzw. mit den untersten Querverbindungsstreben 14, 16 verbunden.

Bei den Tragelementen 3, 10, 11 sind die Aufnahmen 4 bzw. Mittelachsen 5 in zwei bzw. drei Längsreihen 21 mit jeweils acht Aufnahmen 4 angeordnet. Dabei resultieren aus den zwei bzw. drei nebeneinander angeordneten Längsreihen 21 Querreihen 22, die jeweils zwei bzw. drei der Aufnahmen 4 aufweisen. Der seitliche Abstand von Längsreihe 21 zu Längsreihe 21, also der sogenannte Querabstand innerhalb der Querreihen 22, ist vorliegend mit dem Querabstand QA1 bemessen. Die Verschieberichtung V verläuft vorliegend, aber nicht zwingend, parallel zu der Ausrichtung der Querreihen 22.

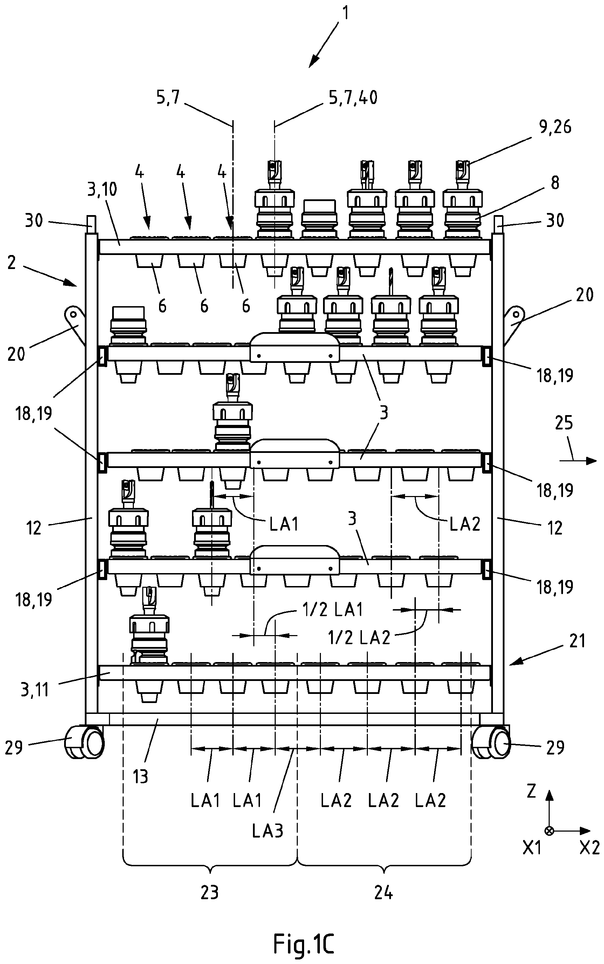

In Fig. 1C ist dargestellt, dass in radialer Richtung zwischen drei unmittelbar benachbarten Mittelachsen 5 der Aufnahmen 4 eines Tragelements 3, 10, 11 die zwei Abstände A ungleich sind. Es liegen mithin bei jeder der Längsreihen 21 in radialer Richtung mehrere unterschiedliche Abstände A zwischen den aufeinander folgenden Aufnahmen 4 und mithin in radialer Richtung zwischen den Mittelachsen 5 der Aufnahmen 4 vor. In einem Abschnitt 23 mit vier gleich beabstandeten Mittelachsen 5 der Aufnahmen 4 ist als Abstand A drei Mal der erste Längsabstand LA1 vorgesehen. In einem weiteren Abschnitt 24 mit vier gleich beabstandeten Mittelachsen 5 der Aufnahmen 4 ist als Abstand A drei Mal der zweite Längsabstand LA2 vorgesehen, wobei der zweite Längsabstand LA2 größer als der erste Längsabstand LA1 ist. Die beiden Abschnitte 23 und 24 sind an den benachbarten Aufnahmen 4 bzw. Mittelachsen 5 um den dritten Längsabstand LA3 in radialer Richtung bzw. in Erstreckungsrichtung 25 der Längsreihen 21 voneinander beabstandet. Die Erstreckungsrichtung 25 der Längsreihen 21 verläuft vorliegend in eine zweite horizontale Richtung X2. Der Längsabstand LA3 weicht vorliegend, aber nicht zwingend, von den ersten und zweiten Längsabständen LA1 bzw. LA2 ab.

In Fig. 1C ist ferner dargestellt, dass die Mittelachsen 5 der Aufnahmen 4 eines der Tragelemente 3, 10, 11 in radialer Richtung jeweils beabstandet sind von den Mittelachsen 5 der Aufnahmen 4 von dem unmittelbar darüber und/oder von dem unmittelbar darunter angeordneten Tragelement 3, 10, 11. Es sind mithin in vertikaler Richtung Z unmittelbar benachbarte, also unmittelbar übereinander angeordnete, Längsreihen 21 zueinander versetzt, und zwar hier zueinander versetzt entlang der Erstreckungsrichtungen 25 der Längsreihen 21 bzw. entlang der zweiten horizontalen Richtung X2. Das führt vorliegend dazu, dass die Mittelachsen 5 von Aufnahmen 4 von unmittelbar übereinander angeordneten Tragelementen 3, 10, 11 sich nicht schneiden bzw. nicht koaxial angeordnet sind und sogar - trotz der unterschiedlichen ersten, zweiten und dritten Längsabstände LA1, LA2, LA3 - jeweils zueinander mittig angeordnet sind. Daher liegt, von einer Mittelachse 5 ausgehend in radialer Richtung, zu einer in der Längsreihe 21 nächsten Mittelachse 5, der Abstand LA1, LA2 oder LA3 vor. Gleichermaßen liegt zu einer nächstgelegenen Mittelachse 5 einer Aufnahme 4 eines unmittelbar darunter oder darüber angeordnetem Tragelements 3, 10, 11 der Abstand ½ LA1, ½ LA2 oder ½ LA3 vor. Auf diese Weise können beispielsweise auskragende Fräsköpfe 26 von Werkzeugen 9 zwischen zwei darüber liegenden, nächstliegenden Aufnahmen 4 kollisionsfrei angeordnet sein, wie es bei dem Tragelement 3 unmittelbar unterhalb des obersten Tragelements 3, 10 der Fall ist (deutlich sichtbar in Fig. 1C). Daher kann wenigstens ein Tragelement 3 von zwei unmittelbar übereinander angeordneten Tragelementen 3, 10, 11 mit eingesetzten Werkzeugen 9 kollisionsfrei in der Verschieberichtung V verschoben werden, da die nach oben auskragenden Werkzeuge 9, beispielsweise ein Fräskopf 26, zwischen den unmittelbar darüberliegenden Aufnahmen 4 bzw. Köchern 6 angeordnet ist.

An jeder der Aufnahmen 4 aus Fig. 1A bis Fig. 1C ist je ein Kennzeichnungsbereich 27 mit einer magnetischen, also lösbaren, Kennzeichnung 28 angeordnet. Der Rahmen 2 weist unterseitige Rollen 29 auf, mittels derer die Vorrichtung 1 mit den Werkzeugen 9 auf einem Boden verschoben und/oder verdreht werden kann. Die Rollen 29 sind mittels zweier jeweils oberhalb von jeweils einer Rolle 29 am Rahmen 2 angeordneten Betätigungsmitteln 30 blockierbar ausgebildet. Die Betätigungsmittel 30 können beispielsweise als Hebel ausgebildet sein. In Fig. 1A ist dargestellt, dass die Betätigungsmittel 30 in einer Freigabestellung sind, während in Fig. 1B dargestellt ist, dass die Betätigungsmittel in einer Blockierstellung sind. In der Blockierstellung 30 kann sich die Rolle 29 weder drehen (also rollen) noch schwenken.

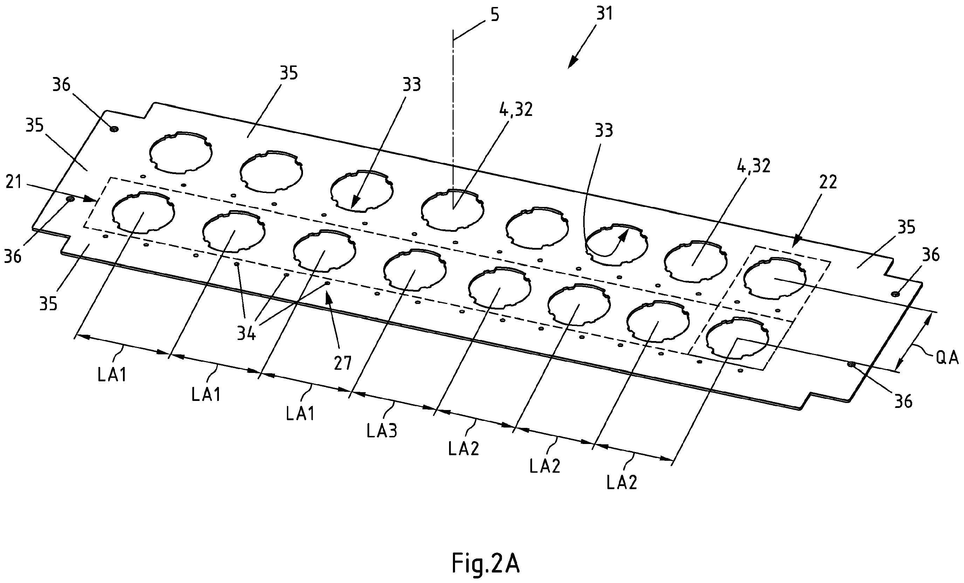

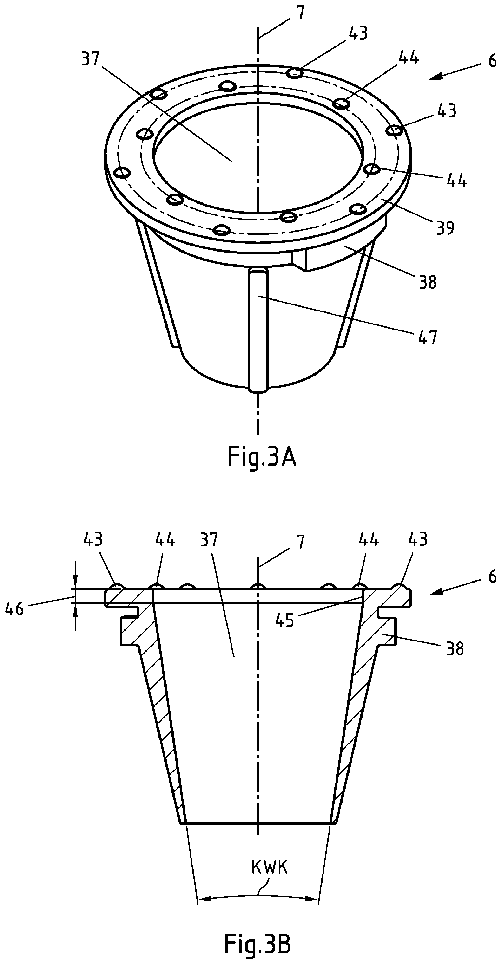

In Fig. 2A ist ein Flachmaterial 31, hier ein zugeschnittenes bzw. vorbearbeitetes Blech, dargestellt, aus dem eines der verschieblichen Tragelemente 3 aus Fig. 1A bis Fig. 1C hergestellt ist. Das Flachmaterial 31 weist sechzehn Durchbrüche 32 als Bestandteile von sechzehn Aufnahmen 4 auf, wobei die Aufnahmen 4 unvollständig dargestellt sind, da die Köcher 6 nicht dargestellt sind. Die Durchbrüche 32 sind in zwei Längsreihen 21 zu je acht Durchbrüchen 32, und demzufolge in acht Querreihen 22 zu je zwei Durchbrüchen 32 angeordnet. Die Durchbrüche 32 sind im Wesentlichen rund und weisen die vertikale Mittelachse 5 der Aufnahme 4 auf. Die Durchbrüche 32 weisen ferner jeweils zwei gegenüberliegende Ausnehmungen 33 auf, mittels derer ein Formschluss gegen Verdrehen des eingesetzten (hier nicht dargestellten) Köchers 6 erreicht werden kann. Die Ausnehmungen 33 sind hier jeweils derart konturiert, dass (hier nicht dargestellte) Montageelemente 47, die außen am Köcher 6 vorstehen (vgl. Fig. 3A), in den Durchbruch 32 kollisionsfrei einsetzbar sind. Unmittelbar neben bzw. vor den Durchbrüchen 32 sind Kennzeichnungsbereiche 27, jeweils paarweise Bohrungen 34 aufweisend, eingearbeitet, in die (hier nicht dargestellte) Kennzeichnungen 28 eingesteckt werden können.

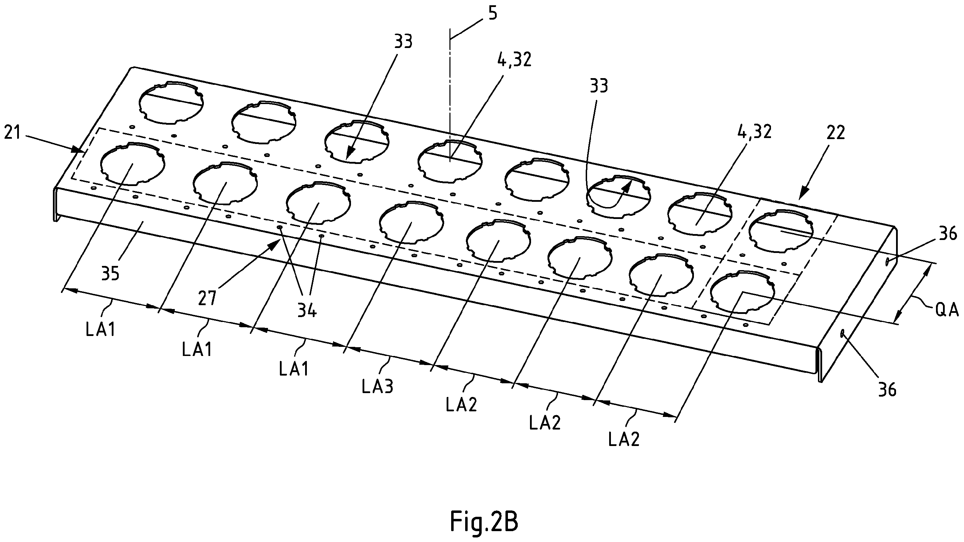

Aus dem Flachmaterial 31 aus Fig. 2A ist das Tragelement 3 aus Fig. 2B bzw. eines der drei verschieblichen Tragelemente 3 aus Fig. 1A bis Fig. 1C hergestellt. In dem Tragelement 3 aus Fig. 2B sind die vier Ränder 35 winklig abgekantet, so dass die Ränder 35 verstärkt sind und das Tragelement 3 insgesamt eine hohe Last tragen kann, da es biegesteifer als ein nicht verstärktes Flachmaterial 31 ist. An den vier Rändern 35 des Tragelements 3 sind Bohrungen 36 angeordnet, die zur Befestigung des Tragelements 3 am Rahmen 2 oder auch zur Befestigung eines Griffs 20 vorgesehen sind.

Es ist bei dem Tragelement 3 aus Fig. 2B möglich (und in Fig. 1A bis Fig. 1C auch dargestellt), dass an den Bohrungen 36 Führungen 19, beispielsweise Schienen, befestigt werden, um eine Verschiebbarkeit des Tragelements 3 im Rahmen 2 mit korrespondierenden Führungen 18 hervorzurufen, die am Rahmen 2 befestigt sind. Solche Führungen 18, 19 sind an jeweils zwei Rändern 35 von den drei verschiebbaren Tragelementen 3 vorgesehen, welche zwischen dem obersten Tragelement 3, 10 und dem oder den untersten Tragelement(en) 3, 11, wie in Fig. 1A bis Fig. 1C, angeordnet sind. Jedes der drei verschiebbaren Tragelemente 3 ist über zwei seiner Ränder 35 im Rahmen 2 befestigt.

In der Fig. 3A und Fig. 3B ist einer der Köcher 6 aus Fig. 1A bis Fig. 1C dargestellt, der zum Aufnehmen einer Werkzeugaufnahme 8 und der zum Einsetzen in die Durchbrüche 32 aus Fig. 2A bis Fig. 2B ausgebildet ist. Der Köcher 6 weist eine konische Innenfläche 37 auf, die die Mittelachse 7 des Köchers 6 umgibt. Der Konuswinkel der Innenfläche ist mit KWK bemessen. Ferner weist der Köcher 6 zwei diametral angeordnete Vorsprünge 38 auf, von denen lediglich einer in Fig. 3A erkennbar ist. Die Vorsprünge 38 sind zum Hintergreifen des Flachmaterials 31 bzw. der Durchbrüche 32 vorgesehen, wenn der Köcher 6 nach dem Einsetzen in den Durchbruch 32 leicht um die Mittelachse 5, 7 verdreht wird, wobei die Vorsprünge 38 und auch die Montageelemente 47 durch die in Fig. 2A bis Fig. 2B dargestellten Ausnehmungen 33 am Durchbruch 32 hindurch geführt werden. Damit wird eine Art eines Bajonettverschlusses erreicht, wodurch die Köcher 6 nicht beim Entnehmen von Werkzeugen 8 versehentlich mit entnommen werden. Ein nach außen weisender, umlaufender Absatz 39 am Köcher 6 ist dazu vorgesehen, auf dem Flachmaterial 31 bzw. auf dem Tragelement 3, 10, 11 aufzuliegen. Der Absatz 39 wirkt also zusammen mit den Vorsprüngen und erzeugt einen Formschluss entlang der Mittelachse 5, 7. Des Weiteren sind oben auf dem Absatz 39 sechs erste Beabstandungselemente 43 und sechs zweite Beabstandungselemente 44 jeweils auf einer eigenen Kreisbahn um die Mittelachse 7 des Köchers 6 angeordnet, wobei die ersten und zweiten Beabstandungselemente 43, 44 hier als linsenförmige bzw. kugelabschnittsförmige Vorsprünge ausgebildet sind. Auf den ersten und zweiten Beabstandungselementen 43, 44 kann eine Werkzeugaufnahme 8 punktförmig aufliegen. Des Weiteren weist der Köcher 6 oberhalb von der konischen Innenfläche 37 im Bereich des Absatzes 39 einen zylindrischen Abschnitt 45 der Innenfläche 37 mit einem Durchmesser von 44,70 mm (passend für die Werkzeugaufnahme 8 vom Typ SK 40) und mit einer Abschnittshöhe 46 von 3 mm entlang der Mittelachse 7 auf. Ferner weist der Köcher 6 insgesamt vier Montageelemente 47 auf, von denen in Fig. 3A lediglich drei ersichtlich sind. Mit den Montageelementen 47 kann der Köcher 6 von außen formschlüssig gegriffen und z.B. im Tragelement 3 bzw. im Durchbruch 32 verdreht werden, damit der durch die Vorsprünge 38 des Köchers 6 gebildete Bajonettverschluss schließen bzw. verklemmen kann. Die Montageelemente 47 sind in Fig. 1A-C nicht dargestellt.

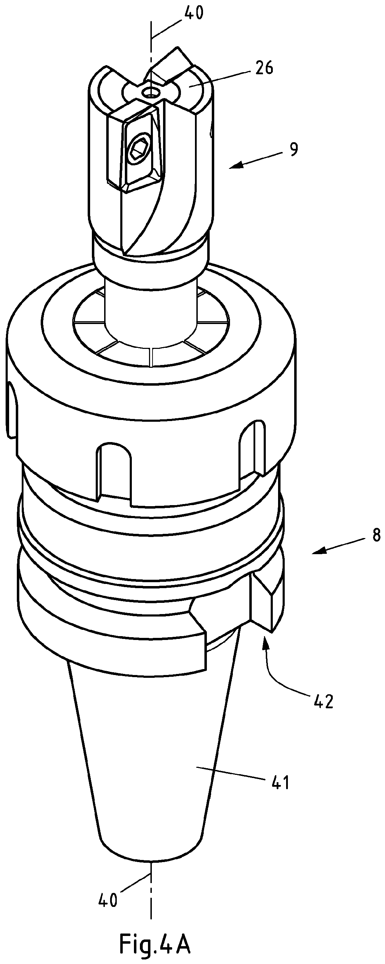

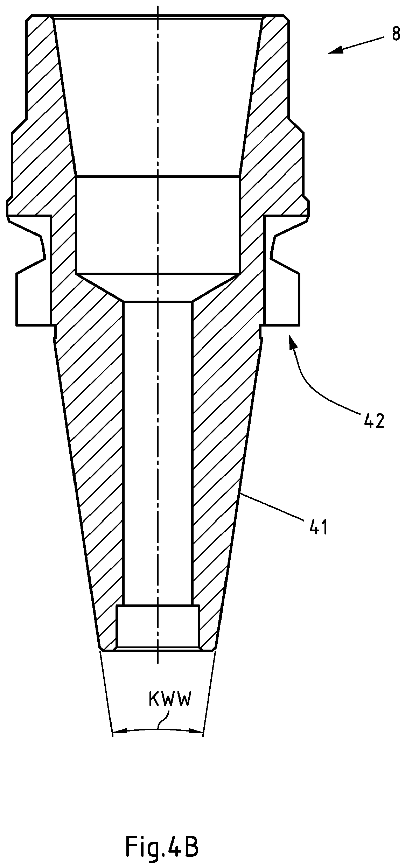

In Fig. 4A ist eines der in einer Werkzeugaufnahme 8 gehaltenen Werkzeuge 9 aus Fig. 1A bis Fig. 1C perspektivisch dargestellt. Hier ist ersichtlich, dass das Werkzeug 9 sowie auch seine Werkzeugaufnahme 8 eine zentrale Achse 40 aufweisen, um welche die konische Außenfläche 41, abgewandt vom Werkzeug 9, angeordnet ist. Der Konuswinkel der Außenfläche 41 der Werkzeugaufnahme ist mit KWW bemessen. Fig. 4B zeigt eine Schnittansicht der Werkzeugaufnahme 8 aus Fig. 4A, in der der Konuswinkel KWW der Außenfläche 41 der Werkzeugaufnahme deutlich erkennbar ist. Oberhalb von der Außenfläche 41 ist ein Vorsprung 42 angeordnet, auf dem die Werkzeugaufnahme 8 in einen Köcher 6 bzw. eine Aufnahme 4 eingesetzt aufliegen kann. An der konischen Außenfläche 41 wird beim Einsetzen typischerweise eine Zentrierung der Werkzeugaufnahme der zentralen Achse 40 zu den Mittelachsen 5, 7 vorgenommen.

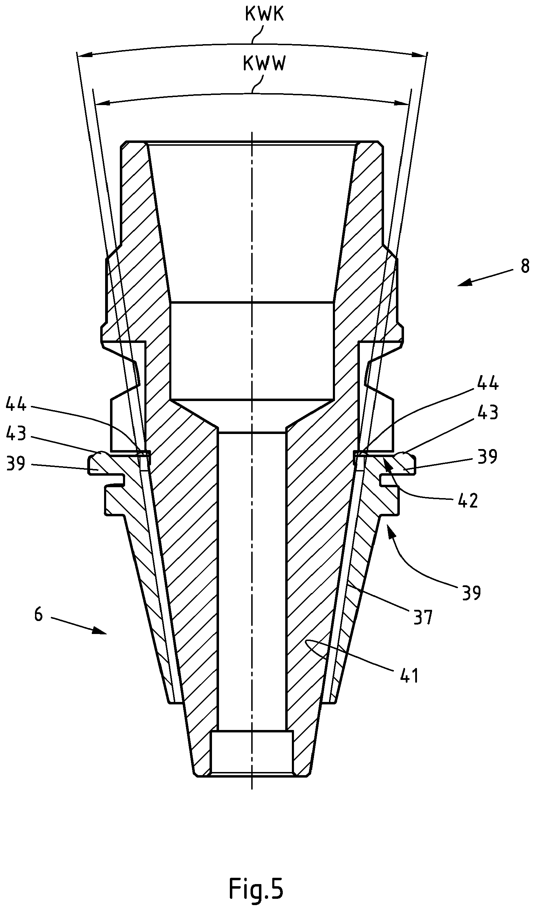

In Fig. 5 ist schließlich die in den Köcher 6 eingesetzte Werkzeugaufnahme 8 dargestellt, wobei die konische Außenfläche 41 der Werkzeugaufnahme 8 nahe an der konischen Innenfläche 37 des Köchers 6 angeordnet ist, jedoch nicht in Kontakt steht. Die beiden Konuswinkel KWK, KWW weichen leicht voneinander ab, und zwar derart, dass die konische Außenfläche 41 der Werkzeugaufnahme 8 an der Innenfläche 37 wenigstens beim Einsetzen abschnittsweise kreislinienförmig anliegen bzw. abgleiten kann und dass ein Zentrieren der Mittelachsen 5, 7, 40 beim Einsetzen hervorgerufen werden kann. Der zylindrische Abschnitt 45 dient dann bedarfsweise, d.h. wenn die Werkzeugaufnahme 8 stark außermittig in den Köcher 6 eingeführt wird, zur Zentrierung der Werkzeugaufnahme 8 bzw. des obersten Teils der Außenfläche 41 im Köcher 6. Der Konuswinkel KWW ist kleiner bzw. spitzer als der Konuswinkel KWK, damit ein großflächiger Kontakt zwischen der Innenfläche 37 und der Außenfläche 41 vermieden wird. Vorliegend liegt ferner der Vorsprung 42 der Werkzeugaufnahme 8 oben auf den zweiten Beabstandungselementen 44 des Köchers 6 auf, um die eingesetzte und mithin zentrierte Werkzeugaufnahme 8 in vertikaler Richtung Z sicher zu stützen. Die ersten Beabstandungselemente 43 stehen hier nicht in Kontakt mit der dargestellten Werkzeugaufnahme 8 und dienen zur bedarfsweisen Auflage einer noch größeren - nicht dargestellten - Werkzeugaufnahme 8.

Ein Festkleben der eingesetzten Werkzeugaufnahme 8 in bzw. an dem Köcher 6 wird dadurch vermieden, dass ein eher punktueller Kontakt zwischen dem Absatz 39 des Köchers 6 und dem Vorsprung 42 der Werkzeugaufnahme 8, und zwar über die hier zweiten Beabstandungselemente 44, vorliegt. Insbesondere weil auch die konische Innenfläche 37 durch abweichende Konuswinkel KWW, KWK nicht an der konischen Außenfläche 41 klemmen kann, und weil der zylindrische Abschnitt 45 der Innenfläche 37 die Innenfläche 37 im Grunde vertikal von der Außenfläche 41 beabstandet, ist damit vorliegend eine leichte und schnelle Entnahme von Werkzeugen 9 ermöglicht. Gleichwohl verhindern die lediglich leicht voneinander beabstandeten Flächen, also die Innenfläche 37 und die Außenfläche 41, ein Verkippen der Werkzeugaufnahmen 8 im Köcher 6 bzw. ein Herausfallen aus dem Köcher 6. Denn die Außenfläche 41 kann durch ein Kippen der Werkzeugaufnahme 8 quer zur Mittelachse des 6 des Köchers 6 leicht in Kontakt mit der Innenfläche 37 geraten und eine weitere Bewegung verhindern.

### Bezugszeichenliste:

- 1:: Vorrichtung
- 2:: Rahmen
- 3:: Tragelement
- 4:: Aufnahme
- 5:: Mittelachse (der Aufnahme 4)
- 6:: Köcher
- 7:: Mittelachse (des Köchers 6)
- 8:: Werkzeugaufnahme
- 9:: Werkzeug
- 10:: Oberstes Tragelement
- 11:: Unterstes Tragelement
- 12:: Eckstütze
- 13:: Bodenrahmen
- 14:: Querverbindungsstrebe
- 15:: oberste Querverbindungsstrebe
- 16:: unterste Querverbindungsstrebe
- 17:: zwischenliegende Querverbindungsstrebe
- 18:: Führung (der Querverbindungsstrebe)
- 19:: Führung (des Tragelements)
- 20:: Griff
- 21:: Längsreihe
- 22:: Querreihe
- 23:: Abschnitt (erster Längsabstand LA1)
- 24:: Abschnitt (zweiter Längsabstand LA2)
- 25:: Erstreckungsrichtung
- 26:: Fräskopf
- 27:: Kennzeichnungsbereich
- 28:: Kennzeichnung
- 29:: Rolle
- 30:: Betätigungsmittel
- 31:: Flachmaterial
- 32:: Durchbruch
- 33:: Ausnehmung (des Durchbruchs 32)
- 34:: Bohrung (des Kennzeichnungsbereichs 27)
- 35:: Rand, Randbereich
- 36:: Bohrung
- 37:: Innenfläche (des Köchers 6)
- 38:: Vorsprung (des Köchers 6)
- 39:: Absatz (des Köchers 6)
- 40:: zentrale Achse (der Werkzeugaufnahme 8, des Werkzeugs 9)
- 41:: Außenfläche (der Werkzeugaufnahme 8)
- 42:: Vorsprung (der Werkzeugaufnahme 8)
- 43:: erstes Beabstandungselement
- 44:: zweites Beabstandungselement
- 45:: Abschnitt (der Innenfläche 37)
- 46:: Abschnittshöhe
- 47:: Montageelement (des Köchers 6)

- A:: Abstand
- KWK:: Konuswinkel (des Köchers 6)
- KWW:: Konuswinkel (der Werkzeugaufnahme 8)
- LA1:: erster Längsabstand
- LA2:: zweiter Längsabstand
- LA3:: dritter Längsabstand
- QA1:: Querabstand
- V:: Verschieberichtung
- X1:: erste horizontale Richtung
- X2:: zweite horizontale Richtung
- Z:: vertikale Richtung

## Patentansprüche

1. Vorrichtung (1) zur Aufbewahrung von Werkzeugen (9), umfassend mehrere Tragelemente (3, 10, 11) und einen Rahmen (2) zum Halten der Tragelemente (3, 10, 11),
- wobei die Tragelemente (3, 10, 11) jeweils mehrere Aufnahmen (4) zum Einstecken von Werkzeugen (9) aufweisen,
- wobei die Aufnahmen (4) jeweils eine Mittelachse (5) aufweisen, und
- wobei wenigstens zwei der Tragelemente (3, 10, 11) in dem Rahmen (2) übereinander angeordnet sind,
**dadurch gekennzeichnet, dass**
- in radialer Richtung zwischen drei unmittelbar benachbarten Mittelachsen (5) der Aufnahmen (4) eines Tragelements (3, 10, 11) die zwei Abstände (A) ungleich sind, und/oder
- die Mittelachsen (5) der Aufnahmen (4) eines der Tragelemente (3, 10, 11) in radialer Richtung jeweils beabstandet sind von den Mittelachsen (5) der Aufnahmen (4) von dem unmittelbar darüber und/oder von dem unmittelbar darunter angeordneten Tragelement (3, 10, 11).

2. Vorrichtung (1) nach Anspruch 1,
**dadurch gekennzeichnet, dass**
bei wenigstens einem Tragelement (3, 10, 11) die Mittelachsen (5) der Aufnahmen (4) in wenigstens einer, bevorzugt zwei oder drei, Längsreihe (21) und/oder in wenigstens einer, bevorzugt acht, Querreihe (22) verteilt angeordnet sind, und, vorzugsweise, wobei eine Längsreihe (21) und/oder eine Querreihe (22) wenigstens zwei der Mittelachsen (5) aufweist, und/oder die Längsreihen (21) quer zur Erstreckung der Längsreihen (21) voneinander beabstandet sind, und/oder die Querreihen (22) quer zur Erstreckung der Querreihen (22) voneinander beabstandet sind.

3. Vorrichtung (1) nach Anspruch 2,
**dadurch gekennzeichnet, dass**
bei wenigstens einem Tragelement (3, 10, 11), die Mittelachsen (5) der Aufnahmen (4) in wenigstens einer Längsreihe (21) in radialer Richtung um einen ersten Längsabstand (LA1), einen zweiten Längsabstand (LA2) oder einen dritten Längsabstand (LA3) beabstandet sind, dass, vorzugsweise, mehrere Mittelachsen (5) der Aufnahmen (4) in der Längsreihe (21) unmittelbar nacheinander in radialer Richtung um den ersten Längsabstand (LA1) und dass, weiter vorzugsweise, mehrere Mittelachsen (5) der Aufnahmen (4) in der Längsreihe (21) nacheinander in radialer Richtung um den zweiten Längsabstand (LA2) beabstandet sind.

4. Vorrichtung (1) nach einem der Ansprüche 1 bis 3,
**dadurch gekennzeichnet, dass**
wenigstens ein Tragelement (3, 10, 11), insbesondere in dem Rahmen (2), entlang einer Verschieberichtung (V) verschiebbar ist, wobei die Verschieberichtung (V) in einem Winkel von bis zu +/- 45° gegenüber einer horizontalen Ebene und/oder einer ersten und/oder zweiten horizontalen Richtung (X1, X2) verläuft, vorzugsweise wobei die Verschieberichtung (V), zumindest im Wesentlichen, in einer horizontalen Ebene und/oder entlang der Querreihe (22) verläuft.

5. Vorrichtung (1) nach Anspruch 4,
**dadurch gekennzeichnet, dass**
die Mittelachsen (5) der Aufnahmen (4) von zwei unmittelbar übereinander angeordneten Trageelementen (3, 10, 11) derart versetzt zueinander angeordnet sind, dass wenigstens eines der beiden unmittelbar übereinander angeordneten Trageelemente (3, 10, 11), insbesondere mit eingesetzten Werkzeugen (9), kollisionsfrei in der Verschieberichtung (V) verschiebbar sind.

6. Vorrichtung (1) nach einem der Ansprüche 1 bis 5,
**dadurch gekennzeichnet, dass**
wenigstens zwei oder drei Tragelemente (3, 10, 11) nicht verschiebbar im Rahmen (2) angeordnet sind und/oder, zumindest im Wesentlichen, in gleicher Höhe und/oder nebeneinander im Rahmen (2) angeordnet sind.

7. Vorrichtung (1) nach einem der Ansprüche 1 bis 6,
**dadurch gekennzeichnet, dass**
ein Tragelement (3, 10, 11) nicht verschiebbar im Rahmen (2) angeordnet ist und/oder zwei, drei, vier, fünf oder mehr Längsreihen (21) aufweist.

8. Vorrichtung (1) nach einem der Ansprüche 1 bis 7,
**dadurch gekennzeichnet, dass**
wenigstens ein Tragelement (3, 10, 11) aus zumindest einem Flachmaterial (31), bevorzugt Blech, hergestellt ist, wobei das Flachmaterial (31) und/oder das Tragelement (3, 10, 11) Durchbrüche (32) als oder für die Aufnahmen (4) und/oder verstärkte Ränder (35), insbesondere zum Befestigen an und/oder in dem Rahmen (2), aufweist.

9. Vorrichtung (1) nach einem der Ansprüche 1 bis 8,
**dadurch gekennzeichnet, dass**
die Aufnahmen (4) jeweils einen Köcher (6) mit einer, zumindest im Wesentlichen, konischen Innenfläche (37) aufweisen und/oder jeweils durch einen Köcher (6) mit einer, zumindest im Wesentlichen, konischen Innenfläche (37) gebildet sind.

10. Vorrichtung (1) nach Anspruch 9,
**dadurch gekennzeichnet, dass**
der Konuswinkel (KWK) der Innenfläche (37) gleich oder ungleich, insbesondere größer, ist als der Konuswinkel (KWW) der jeweiligen Werkzeugaufnahme (8) des Werkzeugs (9).

11. Vorrichtung (1) nach Anspruch 9 oder 10,
**dadurch gekennzeichnet, dass**
oberhalb von der Innenfläche (37), insbesondere angrenzend an die Innenfläche (37), ein, zumindest im Wesentlichen, zylindrischer Abschnitt (45) vorgesehen ist.

12. Vorrichtung (1) nach einem der Ansprüche 9 bis 11,
**dadurch gekennzeichnet, dass**
eine Mittelachse (7) des Köchers (6) von der Innenfläche (37) und/oder von dem zylindrischen Abschnitt (45) umgeben ist und, vorzugsweise, zumindest im Wesentlichen, mit der Mittelachse (5) der Aufnahme (4) zusammenfällt.

13. Vorrichtung (1) nach einem der Ansprüche 1 bis 12,
**dadurch gekennzeichnet, dass**
der Köcher (6), insbesondere oberseitig und/oder auf einem Absatz (39) angeordnete, Beabstandungselemente (43, 44) aufweist, die zur, insbesondere punktuellen, Auflage einer eingesetzten und/oder einzusetzenden Werkzeugaufnahme (8) vorgesehen sind, vorzugsweise wobei erste Beabstandungselemente (43) in radialer Richtung ferner von der Mittelachse (7) des Köchers (6) angeordnet sind als zweite Beabstandungselemente (44).

14. Vorrichtung (1) nach einem der Ansprüche 1 bis 13,
**dadurch gekennzeichnet, dass**
die Tragelemente (3, 10, 11) jeweils den Aufnahmen (4) zugeordnete Kennzeichnungsbereiche (27) aufweisen, wobei die Kennzeichnungsbereiche (27) vorzugsweise zum lösbaren, insbesondere magnetunterstützten, Anordnen von einer Kennzeichnung (28) je Aufnahme (4) vorgesehen sind.

15. Vorrichtung (1) nach einem der Ansprüche 1 bis 14,
**dadurch gekennzeichnet, dass**
der Rahmen (2), insbesondere unterseitige und/oder blockierbare Rollen (29) aufweist, wobei, vorzugsweise, wenigstens eine der Rollen (29) durch ein Betätigungsmittel (30) blockierbar ist, und wobei, weiter vorzugsweise, das Betätigungsmittel (30) oberhalb von den Rollen (29) und/oder am Rahmen (2) und/oder an der Oberseite des Rahmens (2) angeordnet ist.
